# EUROPEAN PATENT SPECIFICATION

(11) **EP 1 493 283 B1**
(45) Date of publication and mention of the grant of the patent: **09.11.2005**
(21) Application number: 03745358.6
(22) Date of filing: 24.03.2003
(51) Int. Cl.: H04N 9/31

(54) **IMAGE PROJECTOR WITH LIGHT SOURCE MODULATION ACCORDING TO IMAGE SIGNAL**
BILDPROJEKTOR MIT LICHTQUELLENMODULATION GEMÄSS EINEM BILDSIGNAL
PROJECTEUR D'IMAGE PERMETTANT DE MODULER LA SOURCE DE LUMIERE REGLEE A UN SIGNAL D'IMAGE

(30) Priority: 28.03.2002 EP 02007094
(43) Date of publication of application: 05.01.2005
(73) Proprietor: Philips Intellectual Property & Standards GmbH, 20099 Hamburg (DE); Koninklijke Philips Electronics N.V., 5621 BA Eindhoven (NL)
(72) Inventor: LÜRKENS, Peter, 52066 Aachen (DE); DEPPE, Carsten, 52066 Aachen (DE)
(74) Representative: Volmer, Georg
(86) International application number: PCT/IB2003/001120
(87) International publication number: WO 2003/084245

(56) References cited:
- WO-A-02/01884
- US-B1- 6 361 172
- PATENT ABSTRACTS OF JAPAN vol. 2000, no. 04, 31 August 2000 (2000-08-31) -& JP 2000 028960 A (NEC CORP), 28 January 2000 (2000-01-28)
- "SINGLE PANEL PROJECTOR LIGHTPATH" RESEARCH DISCLOSURE, KENNETH MASON PUBLICATIONS, HAMPSHIRE, GB, no. 418, February 1999 (1999-02), page 221 XP000893238 ISSN: 0374-4353

## Description

The invention relates to a method for enhancing brightness and contrast in images provided by a projection-based presenter utilising a display panel illuminated by at least one scrolling band of light and a lamp as a light source for said at least one scrolling band of light. The invention relates equally to such a projection-based presenter, to an image processor for such a projection-based presenter and to a regulation and controlling system for such a projection-based presenter.

Projection-based presenter, which project images e.g. onto a wall or a screen, are well known from the state of the art for presenting video and/or still images. Such presenters can be realised as conventional CRT (cathode-ray tube) presenters, as conventional LCD (liquid crystal display) presenters, or as DMD (digital mirror device) presenters.

LCD and DMD presenters comprise a display panel with adjustable apertures, which are usually arranged in a matrix of rows and columns. The display panel can be for instance a transmissive or a reflective LCD panel. Each aperture of the panel represents a pixel of an image that is to be projected. In an LCD-type panel the transmissivity of an individual aperture can be controlled continuously from fully transparent (white) to fully absorbing (black). The effective apertures are therefore adjusted by an image processor to correspond to the brightness of the respective pixel in an image that is to be presented. In case of a digitally controlled display panel which has only an on- or an off-state per aperture, a pulse-width-modulation principle is to be applied by the image processor. Thereby the aperture is switched open a more or less high fraction of the total time, while the switching frequency is higher than the bandwidth of the human eye.

In a conventional projection system, the light coming from the lamp is first separated by filters into the basic colours red, green and blue, supplied to three individual display panels providing the red, green and blue component of the coloured image and then combined again into the full image. Other so called time-sequential systems extract the red, green and blue light content from the lamp light in a sequence of time and provide the basic colours to a single display one after each other, while the repetition rate is sufficiently high not being perceived by the human eye. Common to both systems is that all apertures of the display panels are illuminated at the same time.

In a scrolling colour presenter, in contrast, the display panel is exposed to bands of coloured light, moving vertically from top to bottom over the display panel. The moving bands of light can be provided for instance by a high pressure gas discharge lamp via a scanner. Such a scrolling projection-based presenter is a low-cost projection display solution, since it requires only a single display panel, similar to the time-sequential system, but produces a brighter image because of a higher utilisation of the white light coming from the lamp.

Common to all projection systems is, that the light is discarded which is not required at a specific image position.

In all presenters, the brightness and the contrast of an image is a crucial performance indicator.

From cathode-ray tube systems, a technology is known which allows to display bright parts of a picture even brighter than occasioned by the picture, in case other picture parts are less bright, by an additional variation of the cathode ray intensity. This allows for natural images, more precisely for all non-blank-white images, an increase of the image contrast. This is possible, because in a CRT system all image pixels are displayed sequentially. In a conventional LCD based system, such a feature cannot be provided, because all picture parts are projected at the same time.

For scrolling colour systems, an adjustment of brightness of different image parts is not known.

It is an object of the invention to enable an enhancement of the brightness and the contrast in images presented by a projection-based presenter which uses a display panel illuminated by scrolling light bands and a lamp as a light source for said scrolling light bands.

The object is achieved according to the invention with the method of claim 1, which comprises modulating the light output of the lamp of the presenter between different scrolling positions in a way that a higher light intensity is supplied by the lamp when parts of the display panel currently representing brighter parts of a respective image are illuminated by said at least one scrolling band of light than when parts of the display panel currently representing less bright parts of said image are illuminated by said at least one scrolling band of light.

The object is equally achieved according to the invention with the projection-based presenter of claim 9, having a scrolling display, which presenter comprises means for carrying out the steps of the proposed method.

Further, the object is achieved according to the invention with the image processor for a projection-base presenter of claim 12, having a display panel illuminated by at least one scrolling band of light and a lamp as a light source for said at least one scrolling band of light. The image processor comprises means for controlling the power supply to the lamp for different scrolling positions in a way that a higher light intensity is supplied by the lamp when parts of the display panel currently representing brighter parts of a respective image are illuminated by the at least one scrolling band of light than when parts of the display panel currently representing less bright parts of the image are illuminated by the at least one scrolling band of light.

Finally, the object is achieved according to the invention with a regulation and controlling system for a projection-based presenter utilising a display panel illuminated by at least one scrolling band of light and a lamp as a light source for the at least one scrolling band of light. The regulation and controlling system comprises an image processor determining the power which has to be supplied to the lamp for different scrolling positions in order that a higher light intensity is supplied by the lamp when parts of the display panel currently representing brighter parts of a respective image are illuminated by the at least one scrolling band of light than when parts of the display panel currently representing less bright parts of said image are illuminated by the at least one scrolling band of light. The regulation and controlling system further comprises a lamp power regulator supplying the lamp with power. The lamp power regulator adjusts the power supplied to the lamp according to the respectively required power determined by the image processor.

The invention proceeds from the consideration that in most cases the image performance of a display scrolling projection-based presenter can be improved significantly, in case the light output of a lamp of a presenter is modulated such that brighter image parts are supplied with a higher light intensity than other parts of the image.

It is an advantage of the invention that in a non-blank-white picture a higher peak intensity is achieved as compared to a conventional presenter, and thus at the same time an increase in the maximum contrast in an image.

Preferred embodiments of the invention become apparent from the dependent claims.

In case the presenter employs a display panel with adjustable apertures representing different pixels of the displayed image, preferably the effective apertures are controlled at the same time such that a non-distorted brightness reproduction is maintained. It is to be noted that the term adjustable aperture is employed here as a general term for any means of a display panel enabling for a given illumination an adjustment of the brightness for a specific pixel of an image that is to be displayed, as described e.g. above with reference to LCD display panels and digitally controlled display panels.

Advantageously, the average power supplied to the lamp for adjusting the light output is maintained constant for all images. This can be achieved by decreasing the power and thus the output light for less bright image parts, whenever the power and thus the output light is increased for brighter image parts. Thus, the required average power does not have to be increased in order to obtain brighter image parts.

In case the presenter employs a display panel with adjustable apertures representing different pixels of the displayed image, it is proposed that the effective size of the apertures of a display panel for the dark image parts is increased, in order to avoid that the darker parts are displayed darker than previously due to the decreased output light and thus a distortion of the reproduction of the greyscale or the colour reproduction. In a preferred embodiment of the invention, the maximum aperture in every horizontal line of the display panel is adjusted to an opening of 100%, since this results in the maximum efficiency in exploiting the available light intensity.

In a preferred embodiment of the invention, the lamp employed for supplying the required luminance for the scrolling display is a high pressure gas discharge lamp, e.g. a UHP (ultra high performance) lamp. Such lamps have the capability to react rapidly to a change of the provided power. The rather short time constant of the lamp is determined by the employed high temperature plasma. A high pressure gas discharge lamp is further able to provide an increased light output for a short time without negative effects, i.e. without stressing the lamp body thermally overmuch, as long as the rated power, which is an average power allowed for a long-term operation of the lamp, is not exceeded. The average power used by the presenter can therefore be set close to the maximum value that is acceptable for a long-term operation of the lamp, thereby ensuring that a maximum brightness can be achieved.

Most natural images show a distinct vertical brightness profile, indicating that the world appears basically to be flat. Moreover, known scrolling presenters usually employ a vertical scrolling. In an advantageous embodiment of the invention, the brightness is therefore adjusted for each horizontal line in a vertically scrolling presenter.

The employed display panel can comprise in particular adjustable apertures arranged in a matrix of rows and columns. Preferably, changing fractions of the rows are then illuminated by the at least one scrolling band of light, i.e. each scrolling band of light may illuminate one or more, but not all of the rows at a time.

The presenter can be in particular a video- and data presenter using either a front projection or a rear projection.

In the following, an embodiment of the invention will be described in more detail by way of example with reference to the accompanying drawings of which
Fig. 1 is a block diagram of a first projection system comprising an embodiment of a projection-based presenter according to the invention;
Fig. 2 is a flow chart illustrating an embodiment of the method according to the invention implemented in the presenter of figure 1;
Fig. 3 is a diagram showing the typical brightness profile of an image;
Fig. 4 is a diagram showing an optimised lamp power profile generated with the method according to the invention based on the brightness profile of figure 3; and
Fig. 5 is a block diagram of a second projection system comprising an embodiment of a projection-based presenter according to the invention in combination with a scrolling colour separation.

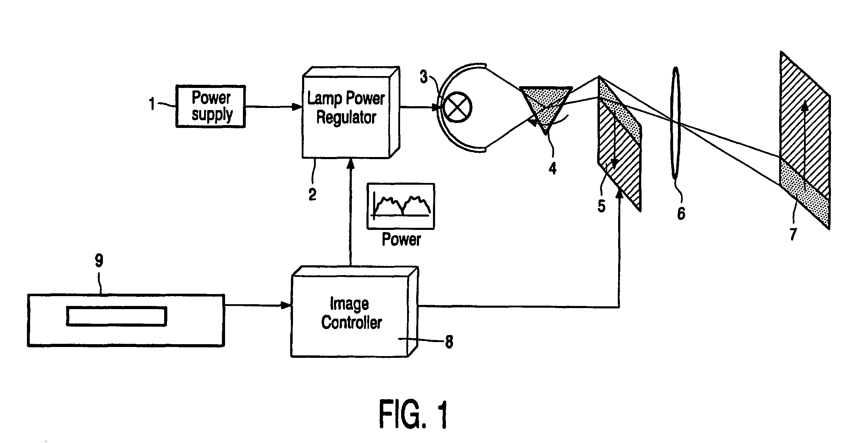

Figure 1 shows a first presentation system which comprises a projection-based presenter according to the invention.

The presenter comprises a power supply 1 which is connected via a lamp power regulator 2 to a UHP high pressure gas discharge lamp 3. The presenter further comprises a display panel 5 with a plurality of adjustable apertures arranged in a matrix, consisting of rows and columns. A scanner 4 is arranged between the UHP lamp 3 and this display panel 5. On the side of the display panel 5 opposite to the scanner 4, in addition a lens 6 is provided. The presenter moreover comprises an image controller 8, one output of which is connected to a control input of the lamp power regulator 2. A second output of the image controller 8 is finally connected to the display panel 5.

A data input of the image controller 8 is connected to an output of an image source 9, e.g. of a DVD player. Finally, a screen 7 is provided at some distance in front of the lens 6 of the presenter.

The functioning of the presenter of figure 1 will be described in the following.

The power supplied by the power supply 1 is controlled by the lamp power regulator 2 to establish a desired electrical power in the lamp 3, an thus, a desired lamp brightness.

The light emitted by the UHP lamp 3 is directed by a reflecting shield of the lamp to the scanner 4. The scanner 4 directs the light from the lamp to the display panel 5 in a way that it illuminates the panel 5 with a stripe of light scrolling from top to bottom over the display panel 5.

The light passing the apertures of the display panel 5 is projected via the lens 6 onto the screen 7 such that the image is displayed on the screen 7 in form of a band moving from the bottom to the top of the screen 7. Depending on the design of the projection system the movement of the bands on the panel and on the screen can also be reverse.

The effective size of the respective apertures of the display panel 5 is adjusted by the image controller 8. The image controller 8 receives image data for images that are to be displayed on the screen 7 from the image source 9. Based on the received data, the image controller 8 determines the required size of the apertures of the display panel 5 for each colour in each vertical line.

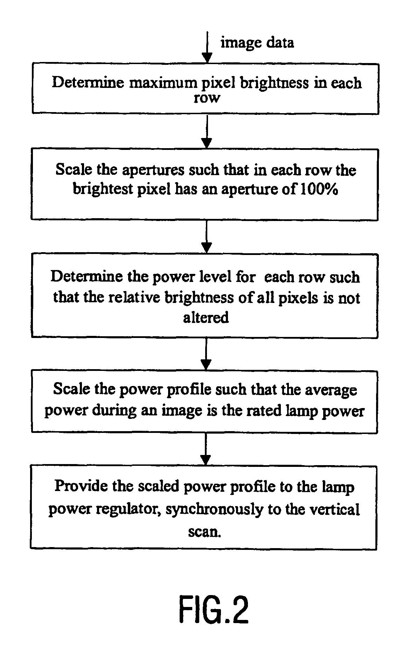

The processing performed by the image controller 8 for determining the size for all apertures and additional processing performed by the image controller 8 according to the invention is illustrated in figure 2.

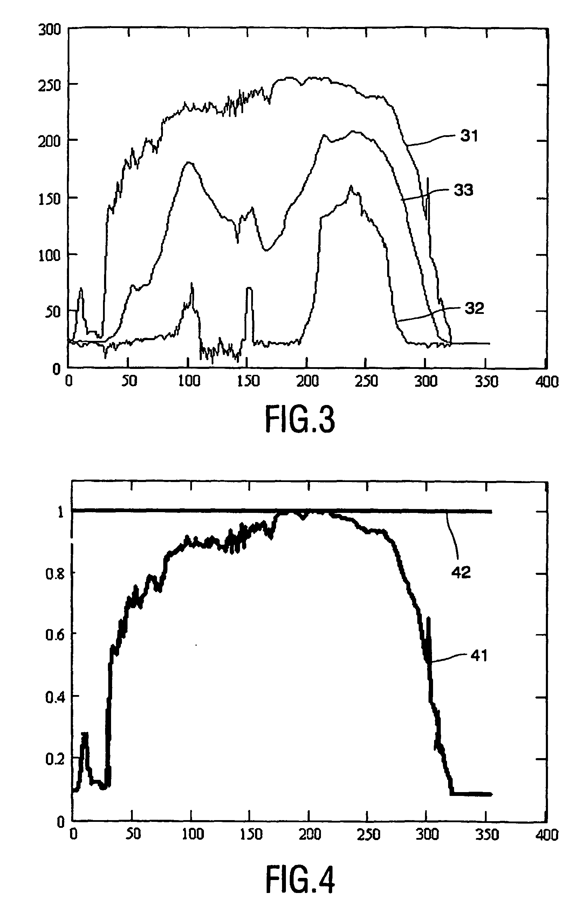

In this processing, the image controller 8 first analyses the profile of the maximum brightness of the received image. More specifically, it detects the maximum brightness in each horizontal line of the image. A typical brightness profile of an image with about 350 horizontal lines is depicted in the diagram of figure 3. A first curve 31 in the diagram indicates the maximum pixel brightness in each horizontal line. A second curve 32 in the diagram indicates the minimum pixel brightness in each horizontal line. A third curve 33 in the diagram finally indicates the average pixel brightness in each horizontal line.

The maximum pixel brightness in each horizontal line determines in conventional methods the maximum aperture required for the corresponding row of the display panel 5 when assuming a light intensity achieved with the rated lamp power supplied to the UHP lamp 3. The other apertures are adapted according to the brightness for the respective other pixels.

The image controller 8 of the presenter according to the invention, in contrast, sets the apertures of the display panel 5 by a corresponding control signal such that in each row, the maximum aperture is 100%, while the other apertures are adapted accordingly.

For those rows of the display panel 5, in which the apertures were increased to achieve a maximum aperture of 100%, the average light intensity of the UHP lamp 4 is no longer required for achieving the required maximum brightness. Thus, it is possible to reduce the lamp power for these rows, resulting in an increased light efficiency. The saved power can be used instead for brighter horizontal lines of the image.

The image controller 8 therefore determines for each row of the display panel 5 the lamp power resulting in the required maximum brightness in this row with a fully opened aperture. For those rows which had already initially the highest aperture, a higher lamp power than the average is used, resulting in an average lamp power equal to the rated power of the lamp but also in a brighter image projection in this part of the picture.

The determined decreased or increased power for all horizontal lines of one image form a lamp power profile, which is forwarded by the image controller 8 to lamp power regulator 2. A corresponding lamp power profile, which was determined based on the brightness profile of figure 3, is depicted in the diagram of figure 4. The diagram shows an optimised power profile for the case that the maximum pixel aperture is 100% in each of about 350 rows. A first curve 41 indicates the lamp power determined for all rows. The lamp power is normalised with the maximum lamp power used, i.e. the maximum lamp power corresponds to a value of 1. A second curve 42 indicates the maximum aperture in each of the about 350 rows. The value of 1 represents for this curve 42 an aperture of 100% selected for all maximum apertures.

The lamp power profile determined by the image processor 8 is sent to the lamp power regulator 2, which adjusts the power supplied to the lamp 3 for each row accordingly. The UHP lamp 3, which reacts rapidly to the changed power settings, is thus able to emit for each row of the display panel 5 a light of an individual intensity. Practically, the maximum pixel brightness is each horizontal line of the displayed image is now determined by the lamp power. The profile of the maximum pixel excitation results then in a maximum value of 1 (white) for each horizontal line.

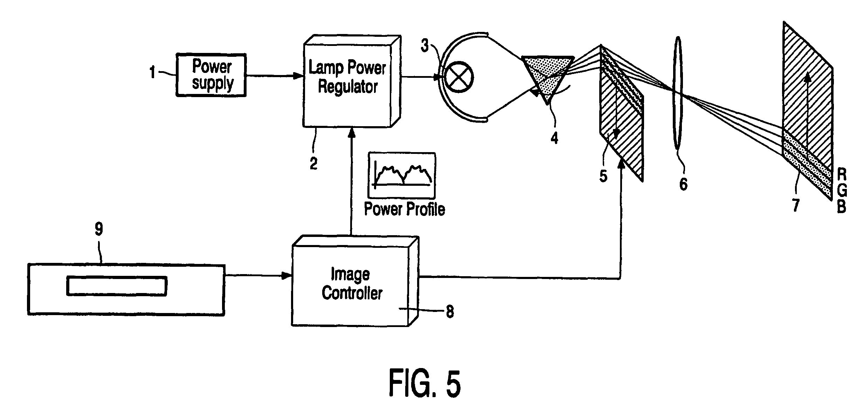

Figure 5 shows a second presentation system which comprises a projection-based presenter according to the invention. The structure of this second presentation system is the same as the structure of the first presentation system depicted in figure 1, and corresponding components were provided with the same reference signs.

In the second presentation system, though, the light band is subdivided by the scanner 4 into three stripes of different colours. In this case, therefore also the spatial distribution of the coloured bands and the colour content of the image have to be considered instead of the pure brightness when determining the power profile for the lamp power. The strategy however remains the same, i.e. maximising the pixel aperture by compensating with the lamp power.

The described embodiments of the invention are thus based on a fast power setting signal fed to the lamp power supply, the image processor producing this signal according to the brightness profile of an image that is to be projected.

As a result of the described power and aperture control, the peak intensity of the projected non blank-white image is increased compared to the peak intensity achieved with a conventional presenter, while the average lamp power remains the same.

Investigations have produced a gain in contrast and peak-brightness of between 10% and 100%, with an average improvement of approximately 40% for a wide range of different picture content.

It is understood that the described embodiment of the invention represents only one of a great variety of possible embodiments of the invention.

## Claims

1. Method for enhancing brightness and contrast in images provided by a projection-based presenter having a display panel (5) illuminated by at least one scrolling band of light and a lamp (3) as a light source for said at least one scrolling band of light, **characterised in that** said method comprises modulating the light output by said lamp (3) between different scrolling positions in a way that a higher light intensity is supplied by said lamp (3) when parts of said display panel (5) currently representing brighter parts of a respective image are illuminated by said at least one scrolling band of light than when parts of said display panel (5) currently representing less bright parts of said image are illuminated by said at least one scrolling band of light.

2. Method according to claim 1, wherein the average light intensity over time supplied by said lamp (3) for an entire image is kept constant.

3. Method according to claim 1 or 2, wherein said projection-based presenter utilises at least one vertically scrolling band of light, and wherein the light intensity supplied by said lamp (3) is adjusted for each horizontal line.

4. Method according to one of the preceding claims, wherein said display panel (5) is illuminated by three scrolling bands of light of different colours.

5. Method according to one of the preceding claims, wherein said light output of said lamp (3) is modulated by varying the power supplied to said lamp (3).

6. Method according to one of the preceding claims, wherein said display panel (5) comprises adjustable apertures arranged in a matrix of rows and columns, and wherein changing fractions of said rows are illuminated by said at least one scrolling band of light.

7. Method according to claim 6, wherein the maximum aperture in each of said rows is adjusted to 100%, and wherein the other apertures of each of said rows are adapted such that a non-distorted brightness reproduction is maintained in each row.

8. Method according to claim 6, comprising:
- determining the maximum brightness of an image that is to be projected in each scrolling position;
- adjusting the apertures of said display panel (5) for each scrolling position in accordance with said image in a way that the maximum aperture is 100%;
- determining for each scrolling position the relative power which has to be provided to said lamp (3) for achieving said determined maximum brightness with said maximum aperture of 100% while maintaining the relation to the brightness of the other image parts;
- scaling the overall power level such that the average power of the lamp corresponds to a rated power level.

9. A projection-based presenter having a display panel (5) illuminated by at least one scrolling band of light and a lamp (3) as a light source for said at least one scrolling band of light,
**characterised in that** said presenter comprises means for modulating the light output by said lamp (3) between different scrolling positions in a way that a higher light intensity is supplied by said lamp (3) when parts of said display panel (5) currently representing brighter parts of a respective image are illuminated by said at least one scrolling band of light than when parts of said display panel (5) currently representing less bright parts of said image are illuminated by said at least one scrolling band of light.

10. Projection based presenter according to claim 9 comprising
- a display panel (5) with adjustable apertures arranged in horizontal lines;
- a lamp (3) for providing light for a projection;
- power supply means (1,2) for providing said lamp (3) with an adjustable power;
- a scanner (4) for directing said light output by said lamp (3) to said display panel (5) in subsequent horizontal bands;
- a lens (6) for projecting an image provided by said display panel (5); and
- an image processor (8) for receiving an image that is to be projected and for controlling the power supply (2) to said lamp (3) and the size of said adjustable apertures of said display panel (5) according to a received image.

11. Projection based presenter according to claim 9 or 10, wherein said lamp is a high pressure gas discharge lamp (3).

12. Image processor (8) for a projection-based presenter having a display panel (5) illuminated by at least one scrolling band of light and a lamp (3) as a light source for said at least one scrolling band of light, **characterised in that** said image processor (8) comprises means for determining the power which has to be supplied to said lamp (3) for different scrolling positions in a way that a higher light intensity is supplied by said lamp (3) when parts of said display panel (5) currently representing brighter parts of a respective image are illuminated by said at least one scrolling band of light than when parts of said display panel (5) currently representing less bright parts of said image are illuminated by said at least one scrolling band of light.

13. Regulation and controlling system for a projection-based presenter having a display panel (5) illuminated by at least one scrolling band of light and a lamp (3) as a light source for said at least one scrolling band of light, said regulation and controlling system comprising an image processor (8) according to claim 12 and further comprising a lamp power regulator (2) supplying said lamp (3) with power, which lamp power regulator (2) adjusts the power supplied to said lamp (3) according to the respectively required power determined by said image processor (8).

## Patentansprüche

1. Verfahren zum Steigern der Helligkeit und des Kontrastes in Bildern, die geliefert werden von einem Geber auf Projektionsbasis mit einer Wiedergabeplatte (5), beleuchtet durch wenigstens ein laufendes Lichtband und mit einer Lampe (3) als Lichtquelle für das genannte wenigstens eine laufende Lichtband, **dadurch gekennzeichnet, dass** das genannte Verfahren das Modulieren des Lichtausgangs der genannten Lampe (3) umfasst, und zwar zwischen verschiedenen Ablaufpositionen in einer derartigen Weise, dass eine höhere Lichtintensität durch die Lampe (3) geliefert wird, wenn Teile der genannten Wiedergabeplatte (5), die zu dem betreffenden Zeitpunkt hellere Teile eines betreffenden Bildes wiedergeben, durch das genannte wenigstens eine laufende Lichtband beleuchtet werden, wenn Teile der genannten Wiedergabeplatte (5), die zu dem betreffenden Zeitpunkt weniger helle Teile des genannten Bildes zeigen, durch das genannte eine laufende Lichtband beleuchtet werden.

2. Verfahren nach Anspruch 1, wobei die von der Lampe (3) in der Zeit gelieferte mittlere Lichtintensität für ein ganzes Bild konstant gehalten wird.

3. Verfahren nach Anspruch 1 oder 2, wobei der genannte Geber auf Projektionsbasis wenigstens ein vertikales Lauflichtband benutzt, und wobei die von der genannten Lampe (3) gelieferte Lichtintensität für jede horizontale Zeile eingestellt wird.

4. Verfahren nach einem der vorstehenden Ansprüche, wobei die genannte Wiedergabeplatte (5) durch drei laufende Lichtbänder verschiedener Farben beleuchtet werden.

5. Verfahren nach einem der vorstehenden Ansprüche, wobei die genannte Lichtausgabe der genannten Lampe (3) durch Variation der der genannten Lampe (3) zugeführten Leistung moduliert wird.

6. Verfahren nach einem der vorstehenden Ansprüche, wobei die genannte Wiedergabeplatte (5) einstellbare Öffnungen aufweist, die in einer Matrix von Reihen und Spalten vorgesehen sind, und wobei Teile der genannten Reihen beleuchtet werden, und zwar durch wenigstens einlaufendes Lichtband.

7. Verfahren nach Anspruch 6, wobei die maximale Öffnung in jeder der genannten Reihen auf 100% einstellbar ist und wobei die anderen Öffnungen jeder der genannten Reihen derart angepasst werden, dass eine ungestörte Helligkeitswiedergabe in jeder Reihe beibehalten wird.

8. Verfahren nach Anspruch 6, wobei dieses Verfahren die nachfolgenden Verfahrenschritte umfasst:
- das Ermitteln der maximalen Helligkeit eines zu projizierenden Bildes in jeder ablaufende Position,
- das Einstellen der Öffnungen der genannten Wiedergabeplatte (5) für jede ablaufende Position entsprechend dem genannten Bild, auf eine Art und Weise, dass die maximale Öffnung 100 ist,
- das für jede laufende Position Ermitteln der relativen Leistung, die der genannten Lampe (3) zugeführt werden soll zum Erreichen der genannten bestimmten maximalen Helligkeit, mit der genannten maximalen Öffnung von 100%, während die Beziehung zu der Helligkeit der anderen Bildteile beibehalten wird,
- Skalierung des gesamten Leistungspegels derart, dass die mittlere Leistung der Lampe einem bewerteten Leistungspegel entspricht.

9. Geber auf Projektionsbasis mit einer Wiedergabeplatte (5), die von wenigstens einem laufenden Lichtband beleuchtet wird und mit einer Lampe (3) als Lichtquelle für das genannte wenigstens eine laufende Lichtband, **dadurch gekennzeichnet, dass** der genannte Geber Mittel zum Modulieren des Lichtausgangs der genannten Lampe (3) umfasst, und zwar zwischen verschiedenen Ablaufpositionen in einer derartigen Weise, dass eine höhere Lichtintensität durch die Lampe (3) geliefert wird, wenn Teile der genannten Wiedergabeplatte (5), die zu dem betreffenden Zeitpunkt hellere Teile eines betreffenden Bildes wiedergeben, durch das genannte wenigstens eine laufende Lichtband beleuchtet werden, als wenn Teile der genannten Wiedergabeplatte (5), die zu dem betreffenden Zeitpunkt weniger helle Teile des genannten Bildes zeigen, durch das genannte eine laufende Lichtband beleuchtet werden.

10. Auf Projektion basierter Geber nach Anspruch 9, der die nachfolgenden Elemente umfasst:
- eine Wiedergabeplatte (5) mit einstellbaren Öffnungen, vorgesehen in horizontalen Zeilen;
- eine Lampe (3) zum Liefern von Licht für eine Projektion,
- Speisemittel (1,2) um die genannte Lampe (3) mit einstellbarer Energie zu versehen,
- einen Abtaster (4) zum Richten des genannten Lichtausgangs der genannten Lampe (3) auf die genannte Wiedergabeplatte (5) in nachfolgenden horizontalen Bändern,
- eine Linse (6) zum Projizieren eines Bildes, das von der genannten Wiedergabeplatte (5) geliefert wird; und
- einen Bildprozessor (8) zum Empfangen eines Bildes, das projiziert werden soll und zum Steuern der Speisung (2) zu der genannten Lampe (3) und der Größe der genannten einstellbaren Öffnungen der genannten Wiedergabeplatte (5) entsprechend einem empfangenen Bild.

11. Auf Projektion basierter Geber nach Anspruch 9 oder 10, wobei die genannte Lampe eine Hochdruckgasentladungslampe (3) ist.

12. Bildprozessor (8) für einen Geber auf Projektionsbasis, mit einer Wiedergabeplatte (5), beleuchtet durch wenigstens ein laufendes Lichtband, und mit einer Lampe (3) als Lichtquelle für das genannte wenigstens eine laufende Lichtband, **dadurch gekennzeichnet, dass** der genannte Bildprozessor (8) Mittel aufweist zum Bestimmen der Leistung, die der genannten Lampe (3) geliefert werden soll für verschiedene laufende Positionen auf eine Weise, dass eine höhere Lichtintensität durch die Lampe (3) geliefert wird, wenn Teile der genannten Wiedergabeplatte (5), die zu dem betreffenden Zeitpunkt hellere Teile eines betreffenden Bildes wiedergeben, durch das genannte wenigstens eine laufende Lichtband beleuchtet werden, als wenn Teile der genannten Wiedergabeplatte (5), die zu dem betreffenden Zeitpunkt weniger helle Teile des genannten Bildes zeigen, durch das genannte eine laufende Lichtband beleuchtet werden.

13. Regelungs- und Steuerungssystem für einen auf Projektion basierten Geber mit einer Wiedergabeplatte (5), beleuchtet durch wenigstens ein laufendes Lichtband und mit einer Lampe (3) als Lichtquelle für das wenigstens eine laufende Lichtband, wobei das Regelungs- und Steuerungssystem einen Bildprozessor (8) nach Anspruch 12 aufweist und weiterhin einen Lampenenergieregler (2), der die genannte Lampe (3) mit Energie versieht, wobei dieser Lampenenergieregler (2) die der genannten Lampe (3) zugeführte Energie regelt, und zwar entsprechend der erforderlichen durch den genannten Bildprozessor (8) bestimmten Energie.

## Revendications

1. Procédé pour améliorer la luminosité et le contraste dans des images fournies par un dispositif de présentation à projection comportant un panneau d'affichage (5) éclairé par au moins une bande de lumière défilante et une lampe (3) comme source lumineuse pour ladite au moins une bande de lumière défilante, **caractérisé en ce que** ledit procédé comprend la modulation de la lumière émise par ladite lampe (3) entre différentes positions de défilement de telle manière qu'une intensité lumineuse supérieure soit fournie par ladite lampe (3) au moment où des parties dudit panneau d'affichage (5) représentant à ce moment-là des parties plus lumineuses d'une image respective sont éclairées par ladite au moins une bande de lumière défilante par rapport au moment où des parties dudit panneau d'affichage (5) représentant à ce moment-là des parties moins lumineuses de ladite image sont éclairées par ladite au moins une bande de lumière défilante.

2. Procédé selon la revendication 1 **caractérisé en ce que** l'intensité lumineuse moyenne dans le temps fournie par ladite lampe (3) pour une image entière est maintenue constante.

3. Procédé selon la revendication 1 ou 2 **caractérisé en ce que** ledit dispositif de présentation à projection utilise au moins une bande de lumière défilant verticalement et **en ce que** l'intensité lumineuse fournie par ladite lampe (3) est ajustée pour chaque ligne horizontale.

4. Procédé selon l'une des revendications précédentes **caractérisé en ce que** ledit panneau d'affichage (5) est éclaire par trois bandes de lumière défilantes de couleurs différentes.

5. Procédé selon l'une des revendications précédentes **caractérisé en ce que** ladite intensité lumineuse de ladite lampe (3) est modulée par variation de la puissance fournie à ladite lampe (3).

6. Procédé selon l'une des revendications précédentes **caractérisé en ce que** ledit panneau d'affichage (5) comprend des ouvertures réglables disposées selon une matrice de lignes et de colonnes et **en ce que** des fractions changeantes desdites lignes sont éclairées par ladite au moins une bande de lumière défilante.

7. Procédé selon la revendication 6 **caractérisé en ce que** l'ouverture maximale dans chacune desdites lignes est ajustée sur 100% et **en ce que** les autres ouvertures de chacune desdites lignes sont adaptées de telle sorte qu'une reproduction sans distorsion de la luminosité est maintenue dans chaque ligne.

8. Procédé selon la revendication 6 comprenant :
- la détermination de la luminosité maximale d'une image qui doit être projetée dans chaque position de défilement;
- le réglage des ouvertures dudit panneau d'affichage (5) pour chaque position de défilement en fonction de ladite image de telle manière que l'ouverture maximale soit de 100%;
- la détermination pour chaque position de défilement de la puissance relative qui doit être fournie à ladite lampe (3) pour obtenir ladite luminosité maximale déterminée avec ladite ouverture maximale de 100% tout en conservant le rapport à la luminosité des autres parties de l'image;
- la pondération du niveau de puissance global de telle sorte que la puissance moyenne de la lampe corresponde à un niveau de puissance nominal.

9. Dispositif de présentation à projection comportant un panneau d'affichage (5) éclairé par au moins une bande de lumière défilante et une lampe (3) comme source lumineuse pour ladite au moins une bande de lumière défilante, **caractérisé en ce que** ledit dispositif de présentation comprend des moyens de modulation de la lumière émise par ladite lampe (3) entre différentes positions de défilement de telle sorte qu'une intensité lumineuse supérieure soit fournie par ladite lampe (3) au moment où des parties dudit panneau d'affichage (5) représentant à ce moment-là des parties plus lumineuses d'une image respective sont éclairées par ladite au moins une bande de lumière défilante par rapport au moment où des parties dudit panneau d'affichage (5) représentant à ce moment-là des parties moins lumineuses de ladite image sont éclairées par ladite au moins une bande de lumière défilante.

10. Dispositif de présentation à projection selon la revendication 9 comprenant :
- un panneau d'affichage (5) doté d'ouvertures réglables disposées en lignes horizontales;
- une lampe (3) pour fournir de la lumière en vue d'une projection;
- des moyens d'alimentation (1,2) pour fournir à ladite lampe (3) une puissance réglable;
- un dispositif de balayage (4) pour diriger ladite lumière émise par ladite lampe (3) jusqu'audit panneau d'affichage (5) en bandes horizontales successives;
- une lentille (6) pour projeter une image fournie par ledit panneau d'affichage (5); et
- un processeur d'image (8) pour recevoir une image à projeter et pour régler l'alimentation (2) à ladite lampe (3) et la taille desdites ouvertures réglables dudit panneau d'affichage (5) en fonction d'une image reçue.

11. Dispositif de présentation à projection selon la revendication 9 ou 10 **caractérisé en ce que** ladite lampe est une lampe à décharge dans un gaz haute pression (3).

12. Processeur d'image (8) pour un dispositif de présentation à projection comportant un panneau d'affichage (5) éclairé par au moins une bande de lumière défilante et une lampe (3) comme source lumineuse pour ladite au moins une bande de lumière défilante, **caractérisé en ce que** ledit processeur d'image (8) comprend des moyens pour déterminer la puissance qui doit être fournie à ladite lampe (3) pour différentes positions de défilement de telle manière qu'une intensité lumineuse supérieure soit fournie par ladite lampe (3) au moment où des parties dudit panneau d'affichage (5) représentant à ce moment-là des parties plus lumineuses d'une image respective sont éclairées par ladite au moins une bande de lumière défilante par rapport au moment où des parties dudit panneau d'affichage (5) représentant à ce moment-là des parties moins lumineuses de ladite image sont éclairées par ladite au moins une bande de lumière défilante.

13. Système de régulation et de commande pour un dispositif de présentation à projection comportant un panneau d'affichage (5) éclairé par au moins une bande de lumière défilante et une lampe (3) comme source lumineuse pour ladite au moins une bande de lumière défilante, ledit système de régulation et de commande comprenant un processeur d'image (8) selon la revendication 12 et comprenant en outre un régulateur de puissance de lampe (2) fournissant de la puissance à ladite lampe (3), lequel régulateur de puissance de lampe (2) ajuste la puissance fournie à ladite lampe (3) selon la puissance requise respectivement qui est déterminée par ledit processeur d'image (8).
